# EUROPEAN PATENT SPECIFICATION

(11) **EP 1 412 554 B1**
(45) Date of publication and mention of the grant of the patent: **14.12.2005**
(21) Application number: 02724575.2
(22) Date of filing: 25.03.2002
(51) Int. Cl.: C23F 11/08, C23F 11/06, C09K 5/04

(54) **METHOD FOR RETARDING CORROSION OF METALS IN LITHIUM HALIDE SOLUTIONS**
VERFAHREN ZUR KORROSIONSINHIBIERUNG VON METALLEN IN WÄSSERIGEN LITHIUMHALOGENIDLÖSUNGEN
PROCEDE POUR RETARDER LA CORROSION DE METAUX DANS DES SOLUTIONS D'HALOGENURE DE LITHIUM

(30) Priority: 02.04.2001 IL 14238601
(43) Date of publication of application: 28.04.2004
(73) Proprietor: Bromine Compounds Ltd., Beer-Sheva 84101 (IL)
(72) Inventor: ITZHAK, David, 84965 Omer (IL)
(74) Representative: Long, Giorgio
(86) International application number: PCT/IL2002/000238
(87) International publication number: WO 2002/079543

(56) References cited:
- EP-A- 0 329 560
- EP-A- 0 338 635
- WO-A-00/67878
- US-A- 2 755 170
- US-A- 3 218 259
- US-A- 4 912 934
- US-A- 5 324 448
- US-B1- 6 203 719
- CHEMICAL ABSTRACTS, vol. 104, no. 2, 13 January 1986 (1986-01-13) Columbus, Ohio, US; abstract no. 9313c, ITOH M.: "Corrosion inhibition of carbon steel and cupronickel by lithium molybdate in concentrated lith bromide solution at elevated temperature" page 9316; XP002239977 & ITOH M:: "Corrosion inhibition of carbon steel and cupronickel by lithium molybdate in concentrated lith bromide solution at elevated temperature" BOSHOKU GIJUTSU, vol. 33, no. 9, 1 September 1984 (1984-09-01), pages 504-508, JP

## Description

### Field of the Invention

The present invention relates to a method for inhibiting or retarding the corrosion of metals in water solutions containing lithium bromide and particularly in concentrated bromide solutions of 20% (w/w) or more. The invention also relates to compositions that inhibit the corrosion in concentrated lithium bromide water solutions.

### Background of the Invention

There are technological processes in which the metals are exposed to high concentrations of halides, and measures must be taken to mitigate adverse effects of the strongly corrosive environment on these metals. An example of such processes are some types of absorption refrigeration processes that use concentrated salt solutions as the working fluid. Water/lithium bromide (W/LiBr) technology is widely used whenever the required refrigeration temperature is above 0°C, an example being air-conditioning of large buildings.

The main problem in maintenance of systems, that comprise metals in contact with concentrated salts, is corrosion. It also holds for machines based on W/LiBr or W/LiCl refrigeration technology in which metal parts are exposed to salts at concentrations higher than 55%, and at temperatures higher than 150°C. The parts containing copper or steel, such as pumps, pipes, valves, heat exchangers, condensers, and absorbers, are attacked especially at higher temperatures. The temperature effect is undesirable, since higher operating temperatures enable a cooling system to achieve higher efficiencies.

It is known that presence of certain minor components in concentrated salt solutions may slow down corrosive processes. For example, in lithium bromide solutions, several anions and cations were used to inhibit or to retard the corrosion, such as nitrate, chromate, arsenate [U.S. Patent No. 3,609,086], antimonate [U.S. Patent No. 3,200,604], molybdate, stannous [WO 98/06883], and other, wherein pH of inhibited solutions was kept neutral or alkaline.

Environmental and other considerations make molybdate a preferable choice as a corrosion inhibitor in concentrated LiBr or LiCl solutions. However, the solubility of Li₂MoO₄ is quite limited in the presence of high halide concentrations, and decreases with increasing concentration of a halide, as is shown in Tab. 1 for LiBr, so that at concentrations higher than 55%, only less than 200 mg/l of Li₂MoO₄ can dissolve. The U.S. Patent No. 3,218,259 discloses the stabilization of molybdate in alkaline LiBr solution, by addition of lithium sulfate, which keeps molybdate concentrations above 200 mg/l for 24-48 hours. However, it is desirable to achieve still higher molybdate concentrations, and for much longer periods. It is therefore an object of this invention to provide a method for increasing molybdate concentration in a concentrated lithium bromide solution, and to stabilize molybdate in liquid phase, thereby to slow down the corrosion of metal parts that come in contact with the liquid phase.

### Summary of the Invention

The present invention relates to a method for inhibiting or retarding the corrosion of metals in neutral and in alkaline lithium halide solutions, and particularly in bromide solutions of concentrations greater than 20% (w/w), and still more particularly in LiBr solutions of concentrations greater than 50% (w/w), at temperatures higher than 50°C. The invention enables an increase in molybdate concentrations in lithium bromide solutions containing lithium hydroxide to more than 800 mg/liter, and stabilizes molybdate in liquid phase, which results in enhanced inhibition of corrosion. The method of this invention comprises introducing into the liquid phase containing lithium hydroxide a crystal habit modifier. A modifier, or a mixture of modifiers, can be chosen from: 2-propenoic acid telomer or its derivative, aminomethylene phosphonic acid or its derivative, 1-hydroxyethylidene-1,1-diphosphonic acid, phosphonobutane-1,2,4- tricarboxylic acid, polyacrylate telomer, polymethacrylate telomer, polymaleate telomer, sulfonated styrene maleic acid, modified polyacrylate, polymaleic anhydride, and sulfonated polystyrene or their mixture. Presence of a modifier in amounts corresponding to concentrations from 1 mg/liter to 2000 mg/liter in an alkaline lithium bromide solution containing molybdate reduces the corrosion rate of a metal, that is in contact with this solution, 2 to 50 fold, according to the working conditions, and according to the measured parameter. The metal can be chosen from mild steel, stainless steel, copper, copper-nickel alloy, and copper-zinc alloys. Thus, in one aspect, the invention relates to the enhancement of molybdate inhibition of corrosion in alkaline solutions of bromides.

### Detailed Description of the Invention

It has now been surprisingly found that some compounds, known to modify crystallization properties of solids, called crystal habit modifiers, retard the corrosion rate of metal parts that are in contact with a lithium bromide solution containing lithium molybdate. The modifier is chosen from 2-propenoic acid telomer or its derivative, aminomethylene phosphonic acid or its derivative, 1-hydroxyethylidene -1,1-diphosphonic acid, phosphonobutane-1,2,4-tricarboxylic acid, polyacrylate telomer, polymethacrylate telomer, polymaleate telomer, sulfonated styrene maleic acid, modified polyacrylate, polymaleic anhydride, sulfonated polystyrene, or their mixture. Modifiers increase the solubility of lithium molybdate and stabilize it in solutions of lithium halide containing lithium hydroxide, enabling the achievement of more than 800 mg/liter of lithium molybdate, compared to less than 200 mg/liter in the prior art.

In one aspect of the invention the lithium halide solution is alkalized by addition of lithium hydroxide to a concentration between 0.01 to 0.30 mol/liter. A modifier is introduced into the solution in an amount corresponding to a concentration in the range from 1 mg/liter to 2000 mg/liter. Lithium molybdate is introduced into the solution in an amount corresponding to a concentration in the range from 100 to 2000 mg/liter. In a preferred embodiment aminomethylene phosphonic acid is introduced into an alkaline LiBr solution, of which anticorrosive properties must be enhanced, in amounts corresponding to a concentration in the range from 10 mg/liter to 1000 mg/liter, followed by introducing Li₂MoO₄ to a concentration in a range from 300 to 1000 mg/liter. In another preferred embodiment, a 2-propenoic acid telomer is introduced into an alkaline LiBr solution to a final concentration of 20 mg/liters, followed by introducing Li₂MoO₄ to a concentration of about 850 mg/liter. The corrosion inhibiting composition, containing about 20 mg/liter of 2-propenoic acid telomer and about 850 mg/liter Li₂MoO₄ is called Super-Mo in this text.

According to another preferred embodiment of the invention a neutral lithium halide solution is treated.

A modifier can be prepared in the form of a solution or an emulsion in water before introducing it into a solution that must be inhibited, and it can further contain LiBr in a concentration of 0 to 60%. The modifier can be transferred to a solution simultaneously with molybdate or separately. In another preferred embodiment, a well stirred mixture of 10% 1-hydroxyethylidene-1,1-diphosphonic acid and 10% Li₂MoO₄ (w/w) in deionized water is transferred to 55% LiBr solution containing 0.1 M LiOH in a volume corresponding to 1/200 of LiBr solution. Both the modifier and molybdate are diluted by several orders, so it is necessary to ensure sufficient mixing of the components, adding minor components to the bulk very slowly, preferably by regulated pumped flow, with limited access of air or oxygen.

One of the preferred corrosion inhibiting compositions, Super-Mo, was checked on mild steel in 65% LiBr containing 0.1 M LiOH at 165°C. Solutions with enhanced and non-enhanced inhibition were compared in a circulation model that simulates conditions in absorption refrigeration systems, letting a solution circulate between two containers being maintained at temperatures of 165°C and 70°C, wherein the steel sample was placed in the hotter one. It was found that in the super-inhibited solution, molybdate remained in a liquid phase at the initial level of about 850 mg/l during the whole test period of 3 months, while in the non-enhanced mixture molybdate decreased from its initial value of 200 mg/liter to 70 mg/liter during this period. The corrosion rate of mild steel at 165°C under the above conditions was about 0.01 mm/year (mpy) in the super-inhibited solution after the test period of 3 months compared to a rate of 0.06 mpy for the normal solution. The corrosion rate in the super-inhibited fluid remained constant during the whole test period, while the corrosion rate for the normal solution permanently increased during this period. It is clear that the difference of corrosion rates between super-inhibited and normal systems grows with time, and an extrapolation to longer periods suggests still greater cumulative damages in a system without enhanced inhibition in comparison with a super-inhibited system. It has been further found that the method according to the invention imparts protection against corrosion also to copper. The corrosion rate of commercial copper at 165°C in the circulation system, mentioned above, was 0.03 mpy in the presence of Super-Mo, and 0.12 mpy in its absence, after a test period of 1 month.

The corrosion process is accompanied by hydrogen evolution. It has been found that the method of the invention reduces evolution of hydrogen in solutions in which a metal is dipped. A positive correlation was found between quantity of evolved hydrogen and corrosion rate. This indicates that the inhibiting composition reduces all the processes that are related to corrosive destruction of metals. This phenomenon can be further used for estimation of the protecting effects of various inhibiting compositions according to this invention by determining hydrogen content above the liquid phase.

As said above, use of higher temperatures is desirable in some applications. Bearing this in mind, the method of this invention has also been applied at the highest temperatures expected for W/LiBr or W/LiCl absorption refrigeration systems. The corrosion rate of mild steel placed in a static chamber at 232°C, in 65% LiBr containing 0.1 M LiOH, after a test period of 7 days, was 11.5 mpy in a normal solution, and 4.1 mpy in the solution inhibited with Super-Mo. The hydrogen evolution under these conditions, related to the surface of examined mild steel, was 2.7 mg/inch² (about 0.0042 kg/m²) in a normal system, and 1.3 mg/inch² (about 0.0020 kg/m²) in a super-inhibited one. The invention thus relates to the improvement of processes in which metals are in contact with high salt concentrations at high temperatures, when corrosive processes represent especially grave problems, by enhancing molybdate-inhibition of corrosion.

### Examples

### Example 1

### Measuring molybdate concentration

Solutions of LiBr (Sigma-Aldrich) in deionized water were prepared by weighing both components to glass beakers. To 50 ml of each solution, 0.5 g of lithium molybdate (Sigma-Aldrich) was added, the mixture was mixed for 5 hours at 50°C, and filtered on Watman paper no. 41. Molybdate concentration was determined in the filtrate by atomic absorption. The results, showing the dependence of molybdate solubility on bromide concentration, are presented in Tab. 1.

**Table 1.**

| | | | | | | | | | | |
|---|---|---|---|---|---|---|---|---|---|---|
| LiBr %(w/w) | 46 | 47 | 48 | 49 | 50 | 52 | 54 | 56 | 58 | 60 |
| Li₂MoO₄ mg/liter | 751 | 647 | 570 | 482 | 422 | 307 | 236 | 192 | 121 | 104 |

### Example 2

### Preparation of Super-Mo

Lithium bromide 5.5 kg, and lithium hydroxide (Sigma-Aldrich), 12 g, were dissolved in 4.4 kg deionized water in a well stirred vessel. 2-Propenoic acid telomer (Argad Water Industries, Atlit, Israel), 50 g, was well emulsified in 450 g water, and 50 g of the fine emulsion was fed into the vessel during 15 minutes, and intensive stirring continued for 1.5 hours. Lithium molybdate 8.5% (w/w) solution in water, 60 g, was fed during 15 minutes to the vessel, followed by continued stirring for 1.5 hours. The mixture, about 6 liter, was filtered on Watman paper no. 41, and stored at ambient temperatures. The resulting mixture, called Super-Mo in this text, contained about 850 mg/liter of lithium molybdate, as measured by atomic absorption.

### Example 3

### Corrosion measurements in a circulation system

A closed recirculation system was built comprising two vessels made of mild steel, ST 37, interconnected with two tubes, the total volume being about 3 liters. One of the vessels was maintained at 165°C by an electrical heating coil, and the other one, provided with a vapor condenser and a trap, was maintained at 70°C by a cooling jacket. Liquid moved through the system by spontaneous thermo-siphon circulation. A sample of examined metal was placed in the hotter vessel, and it was weighed at required intervals. The observed mass reduction was recalculated to corrosion rates, and extrapolated from the test period to mpy values.

In two of the experiments, corrosion of mild steel, ST 37, was compared in alkaline 65% LiBr solution with and without enhanced inhibition. In the first experiment, the system was filled with 55% LiBr solution containing 0.085 M LiOH, and Li₂MoO₄ in an initial concentration of 230 mg/liter. Temperatures in the system were then raised, and water vapor was allowed to leave the system, and to condense. Condensed water was weighed, and the volume of solution in the system was allowed to decrease to 85% of its initial value, whereby LiBr concentration increased to 65% (w/w) and Li₂MoO₄ to about 270 mg/liter. The system was then closed, and it was maintained at the required temperatures. In the second experiment, the system was filled with alkaline LiBr solution which was inhibited by Super-Mo. The test period was about 3 months. The results are presented in Tab. 2.

**Tab. 2**

| Time (day) | Corrosion rate (mm/year) | |
|---|---|---|
| | without enhancing | with Super-Mo |
| 7 | 0.015 | 0.012 |
| 14 | 0.019 | 0.013 |
| 28 | 0.025 | 0.013 |
| 47 | 0.037 | |
| 60 | | 0.012 |
| 67 | 0.041 | |
| 81 | 0.057 | 0.012 |

### Example 4

### Corrosion measurement in static chamber

A thermostated 2 liter vessel made of stainless steel, AISI 316, was used as a closed system, in which a smaller 200 ml container, made of mild steel ST 37, was placed with a solution and a sample of mild steel ST 37. The outer vessel was provided with a heating coat, and enabled measurements of corrosion rates and hydrogen evolution at 232°C. The temperature was always lowered to ambient before weighing the steel sample or taking gas samples. Corrosion rates, extrapolated from the test period to mpy, were calculated from mass changes of the steel sample. Hydrogen concentration above the liquid phase was measured by GC, and the observed values were recalculated to mg per square inch of the metal surface. In two experiments, corrosion of mild steel was compared for 65% LiBr containing 0.1 M LiOH, at 232°C, in solution with and without enhanced inhibition. In the first experiment, the chamber was filled with 55% LiBr solution containing 0.085 M LiOH, and Li₂MoO₄ in an initial concentration 230 mg/liter. Water vapor was allowed to escape from the vessel at a higher temperature, and the system was hermetically closed when the volume of LiBr solution decreased to 85% of its initial volume. In the second experiment, the system was filled with alkaline LiBr solution inhibited by Super-Mo. The test period was 7 days. The results are presented in Table 3.

**Table 3.**

| | Li₂MoO₄ < 270 mg/liter | Super-Mo |
|---|---|---|
| Corrosion rate [mpy] | 11.5 | 4.1 |
| Hydrogen evolution [mg/inch²] | 2.7 | 1.3 |

### Example 5

In two experiments, corrosion of commercial copper was examined in the circulation system described in Example 3. A comparison was made in a 65% LiBr solution containing 0.1 M LiOH either with orwithout enhanced inhibition. In the first experiment, the system was filled with normal alkaline LiBr solution, without Super-Mo, having initial concentration of Li₂MoO₄ 270 mg/liter. In the second experiment, the system was filled with alkaline LiBr solution inhibited by Super-Mo. The test period was about 28 days. The corrosion rates without and with Super-Mo were 0.12 mpy and 0.03 mpy, respectively.

### Example 6

Stability of molybdate in liquid phase was examined in two experiments performed in the circulation system described in Example 3. Solution of 65% LiBr containing 0.1 M LiOH, inhibited either with 270 mg Li₂MoO₄ or with Super-Mo, was recirculated for 12 days and molybdate level was measured at intervals. The results are presented in Table 4.

**Table 4.**

| Time (hour) | Li₂MoO₄ (mg/liter) | |
|---|---|---|
| | Without enhancement | With Super-Mo |
| 0 | 270 | 840 |
| 20 | 170 | 876 |
| 93 | - | 891 |
| 102 | - | 891 |
| 170 | - | 899 |
| 180 | - | 858 |
| 305 | 70 | 858 |

### Example 7

To each of three flasks, 500 ml of 55% (w/w) LiBr aqueous solution, containing 0.085 M LiOH, was added. To the first flask, Li₂MoO₄ was added to a concentration of 700 mg/l; to the second flask, Li₂MoO₄, and aminomethylenephosphonic acid (AMPA) were added to concentrations of 700 mg/l and 100 mg/l, respectively; and to the third flask, Li₂MoO₄, and AMPA were added to concentrations of 500 mg/l and 100 mg/l, respectively. The closed flasks were then shaken intensively for 30 minutes, and placed at 50°C. Samples of 5 ml were taken at intervals, filtered, and Li₂MoO₄ in the filtrate was determined as described in Example 1. The results are presented in Tab. 5. The stabilization effect of the crystal behavior modifier is evident in both the higher and lower concentration of molybdate.

**Table 5.**

| Time (days) | Lithium molybdate concentration (mg/liter) | | |
|---|---|---|---|
| | Li₂MoO₄ without modifier added to 700 | Li₂MoO₄with Modifier added to 700 | Li₂MoO₄with modifier added to 500 |
| 0 | 221 | 693 | 495 |
| 1 | 162 | 715 | 521 |
| 10 | 129 | 744 | 516 |
| 31 | 111 | 656 | 458 |

## Claims

1. A method for inhibiting or retarding corrosion of metals in contact with water solutions containing lithium bromide and lithium hydroxide, comprising introducing into said solution a crystal habit modifier and lithium molybdate, wherein said crystal habit modifier is chosen from the group consisting of 2-propenoic acid telomere and its derivatives, polyacrylate telomer, polymethacrylate telomer, polymaleate telomer, sulfonated styrene maleic acid, modified polyacrylate, polymaleic anhydride, sulfonated polystyrene, and a mixture thereof, and wherein said lithium molybdate is present in the solution in a concentration of from 100 mg/liter to 2000 mg/liter.

2. A method according to claim 1, wherein the modifier is introduced into the solution in an amount corresponding to a concentration in the range from 1 to 2000 mg/liter.

3. A method according to claim 1, wherein lithium hydroxide is present in the solution in a concentration from 0.01 mol/liter to 0.30 mol/liter.

4. A method according to claim 1, wherein the concentration of said lithium bromide is greater than 20% (w/w).

5. A method according to claim 1, wherein the modifier and molybdate can be introduced in any order or simultaneously.

6. A method according to claim 1, wherein the metal comprises steel or copper.

7. A method according to claim 6, wherein the metal comprises either mild steel or stainless steel.

8. A method according to claim 6, wherein the metal comprises copper, a copper-nickel alloy, or a copper-zinc alloy.

9. A method according to claim 1, wherein the modifier is introduced into the solution aas emulsion or solution in water.

10. A method according to claim 1, wherein the metal and the solution have a temperature higher than 50°C.

11. A method according to claim 1, wherein the metal and the solution have a temperature higher than 150°C.

12. A composition containing lithium bromide, lithium hydroxide, and lithium molybdate together with any modifier of claim 1, wherein the concentration of lithium molybdate in the solution is from 100 mg/liter to 2000 mg/liter.

## Patentansprüche

1. Verfahren zur Hemmung oder Verzögerung der Korrosion von Metallen in Kontakt mit Wasserlösungen, die Lithiumbromid und Lithiumhydroxid enthalten, wobei das Verfahren das Einführen eines Kristallhabitusmodifizierungsmittels und von Lithiummolybdat in die Lösung umfasst, wobei das Kristallhabitusmodifizierungsmittel aus der Gruppe von einem 2-Propensäuretelomer und dessen Derivaten, einem Polyacrylattelomer, Polymethacrylattelomer, Polymaleattelomer, sulfonierter Styrolmaleinsäure, modifiziertem Polyacrylat, Polymaleinsäureanhydrid, sulfoniertem Polystyrol und einem Gemisch derselben ausgewählt ist und wobei das Lithiummolybdat in der Lösung in einer Konzentration von 100 mg/l bis 2000 mg/l vorhanden ist.

2. Verfahren nach Anspruch 1, wobei das Modifizierungsmittel in die Lösung in einer Menge, die einer Konzentration im Bereich von 1 bis 2000 mg/l entspricht, eingeführt wird.

3. Verfahren nach Anspruch 1, wobei Lithiumhydroxid in der Lösung in einer Konzentration von 0,01 mol/l bis 0,30 mol/l vorhanden ist.

4. Verfahren nach Anspruch 1, wobei die Konzentration des Lithiumbromids größer als 20 % (Gew/Gew) ist.

5. Verfahren nach Anspruch 1, wobei das Modifizierungsmittel und Molybdat in einer beliebigen Reihenfolge oder gleichzeitig eingeführt werden können.

6. Verfahren nach Anspruch 1, wobei das Metall Stahl oder Kupfer umfasst.

7. Verfahren nach Anspruch 6, wobei das Metall entweder Weichstahl oder nicht-rostenden Stahl umfasst.

8. Verfahren nach Anspruch 6, wobei das Metall Kupfer, eine Kupfer-Nickel-Legierung oder eine Kupfer-Zink-Legierung umfasst.

9. Verfahren nach Anspruch 1, wobei das Modifizierungsmittel in die Lösung als Emulsion oder Lösung in Wasser eingeführt wird.

10. Verfahren nach Anspruch 1, wobei das Metall und die Lösung eine Temperatur von höher als 50 °C aufweisen.

11. Verfahren nach Anspruch 1, wobei das Metall und die Lösung eine Temperatur von höher als 150 °C aufweisen.

12. Zusammensetzung, die Lithiumbromid, Lithiumhydroxid und Lithiummolybdat zusammen mit einem beliebigen Modifizierungsmittel nach Anspruch 1 enthält, wobei die Konzentration von Lithiummolybdat in der Lösung 100 mg/l bis 2000 mg/l beträgt.

## Revendications

1. Procédé permettant d'empêcher ou de retarder la corrosion de métaux en contact avec des solutions aqueuses contenant du bromure de lithium et de l'hydroxyde de lithium, consistant à introduire dans ladite solution un modificateur de l'habitus cristallin et du molybdate de lithium, où ledit modificateur de l'habitus cristallin est choisi dans le groupe consistant en un télomère d'acide 2-propénoïque et ses dérivés, un télomère de polyacrylate, un télomère de polyméthacrylate, un télomère de polymaléate, le styrène-acide maléique sulfoné, le polyacrylate modifié, l'anhydride polymaléique, le polystyrène sulfoné, et un mélange de ceux-ci, et où ledit molybdate de lithium est présent dans la solution en une concentration allant de 100 mg/litre à 2000 mg/litre.

2. Procédé selon la revendication 1, dans lequel le modificateur est introduit dans la solution en une quantité correspondant à une concentration comprise dans la gamme allant de 1 à 2000 mg/litre.

3. Procédé selon la revendication 1, dans lequel l'hydroxyde de lithium est présent dans la solution en une concentration allant de 0,01 mol/litre à 0,30 mol/litre.

4. Procédé selon la revendication 1, dans lequel la concentration dudit bromure de lithium est supérieure à 20% (p/p).

5. Procédé selon la revendication 1, dans lequel le modificateur et le molybdate peuvent être introduits dans un ordre quelconque ou simultanément.

6. Procédé selon la revendication 1, dans lequel le métal consiste en de l'acier ou du cuivre.

7. Procédé selon la revendication 6, dans lequel le métal consiste en de l'acier doux ou bien de l'acier inoxydable.

8. Procédé selon la revendication 6, dans lequel le métal consiste en du cuivre, un alliage de cuivre et de nickel,
ou un alliage de cuivre et de zinc.

9. Procédé selon la revendication 1, dans lequel le modificateur est introduit dans la solution sous forme d'une émulsion ou d'une solution dans l'eau.

10. Procédé selon la revendication 1, dans lequel le métal et la solution ont une température supérieure à 50°C.

11. Procédé selon la revendication 1, dans lequel le métal et la solution ont une température supérieure à 150°C.

12. Composition contenant du bromure de lithium, de l'hydroxyde de lithium, et du molybdate de lithium conjointement avec un modificateur quelconque selon la revendication 1, dans laquelle la concentration du molybdate de lithium dans la solution est comprise entre 100 mg/litre et 2000 mg/litre.
